# EUROPEAN PATENT APPLICATION

(11) **EP 1 933 238 A1**
(43) Date of publication of application: **18.06.2008**
(21) Application number: 07122325.9
(22) Date of filing: 04.12.2007
(51) Int. Cl.: G06F 13/40

(54) **An apparatus for non-disruptively disconnecting a peripheral device**

(30) Priority: 11.12.2006 US 608905
(71) Applicant: Honeywell International Inc., Morristown, NJ 07962 (US)
(72) Inventor: Souders, Keith A., Tampa, FL 33619 (US); Haque, Jamal, Clearwater, FL 33626 (US)
(74) Representative: Buckley, Guy Julian

(57) **Abstract**

An electronic device for non-disruptively disconnecting a peripheral device is disclosed. The electronic device has a communication bus. The communication bus has a first logical layer for interacting with a peripheral device. The first logical layer is configured to be adjacent to a second logical layer on a peripheral device. Finally, a connector is at a junction of the first logical layer and the second logical layer.

## Description

### BACKGROUND

Plug and play (PnP) systems are found in virtually all personal computers and many computer controlled machines as well. PnP systems, also known as hot-swapping systems, allow connection and disconnection of peripheral devices to a host system without manual installation of device drivers, and without a reboot of the host system.

A principle feature of a PnP system is its ability to automatically reconfigure a communication bus after the connection or disconnection of a peripheral. When the communication bus of the PnP system notices a change in the peripheral layout the bus initiates a reset. A connect or disconnect by a peripheral is recognized by sensing the power to the peripheral or by a special circuit on the peripheral connector. The reconfiguration process recognizes and reacquires of all the peripherals connected to the bus to ensure that each peripheral is properly loaded in the host system and is given access to the communication bus. The reconfiguration process must reconfigure all peripherals connected to the bus even when only one of peripherals is connected or disconnected to ensure that no peripherals are in conflict. Any newly connected peripherals are recognized and the drivers for the peripheral are automatically retrieved and loaded. Likewise, if a peripheral is disconnected, the reconfiguration process disables the drivers of the peripheral within the system and assigns the peripherals time slot to another device. Some examples of common PnP systems include Universal Serial Bus (USB), FireWire (IEEE 1394), and Peripheral Component Interconnect (PCI).

Communication busses typically have interfaces which allow devices to interact with the communication bus by converting their complex commands and data into bit level data, and to transmit that data over the communication bus. Many interfaces have a protocol that is divided into layers. The layered design divides the functions of the protocol into a series of logical layers. Each layer requests services from the layer below and performs services for the layer above. Layering the protocol makes it easier to design and use the protocol. As an example, the IEEE 1394 protocol is divided into three layers: a physical layer, a link layer, and a transaction layer. The highest layer, the transaction layer, is responsible for reading, writing, and other high level commands to and from the communicating device. The middle layer is the link layer, which deals with data at a packet level. The lowest layer of the protocol is the physical layer, which is responsible for actual data transmission and reception over the bus including arbitration to the bus. After the physical layer, the information travels on the bus and is handled by another device. The physical layer, therefore, is typically viewed as the junction between the peripheral and the other devices. Thus, the hardware connectors of a peripheral are located at the junction of the physical layer and the communication bus.

In current PnP systems such as those used in spacecraft, the communication bus is often set up so the peripherals are daisy-chained together. Daisy-chaining the peripherals places each peripheral one behind the other along a communication stream A message, therefore, is transmitted to one peripheral and must be passed on or allowed to be passed through by that peripheral to the next peripheral in the chain. For example, a message from the host to the fifth peripheral in the chain requires that the first four peripherals forward the message before it will arrive at the fifth device. Since any peripheral depends upon the peripherals upstream, if one peripheral is unable to forward data, all downstream peripherals will lose communication with the host. Thus, in current systems when a peripheral is disconnected from the communication bus, reconfiguration of the communication bus is necessary to remove the old peripheral from the chain.

For the reasons stated above, and for other reasons stated below which will become apparent to those skilled in the art upon reading and understanding the present specification, there is a need in the art for a method of reducing the disruption caused by the connection or disconnection of a peripheral in a PnP system.

### SUMMARY

The above-mentioned problems of current systems are addressed by embodiments of the present invention and will be understood by reading and studying the following specification. The following summary is made by way of example and not by way of limitation. It is merely provided to aid the reader in understanding some of the aspects of the invention. In one embodiment, an electronic device has a communication bus. The communication bus has a first logical layer for interacting with a peripheral device. The first logical layer is configured to be adjacent to a second logical layer on a peripheral device. Finally, a connector is at a junction of the first logical layer and the second logical layer.

### BRIEF DESCRIPTION OF THE DRAWINGS

The present invention can be more easily understood and further advantages and uses thereof more readily apparent, when considered in view of the detailed description and the following figures in which:

Figure 1 is a schematic view of one embodiment of a system for non-disruptively disconnecting peripheral devices;

Figure 2 is a schematic view of one embodiment of a communication bus and interface protocol for non-disruptively disconnecting peripheral devices;

Figure 3 is a flow diagram illustrating one embodiment of a method of non-disruptively disconnecting a peripheral device; and

Figure 4 is a schematic view of the embodiment of a system for non-disruptively disconnecting peripheral devices shown in Figure 1.

In accordance with common practice, the various described features are not drawn to scale but are drawn to emphasize specific features relevant to the present invention. Reference characters denote like elements throughout Figures and text.

### DETAILED DESCRIPTION

In the following detailed description, reference is made to the accompanying drawings that form a part hereof, and in which is shown by way of illustration specific illustrative embodiments in which the device may be practiced. These embodiments are described in sufficient detail to enable those skilled in the art to practice the invention, and it is to be understood that other embodiments may be utilized and that logical, mechanical and electrical changes may be made without departing from the spirit and scope of the present invention. The following detailed description is, therefore, not to be taken in a limiting sense.

The reconfiguration process occurring when a peripheral device is disconnected from a communication bus generally works well for personal computers, but it can produce catastrophic side-effects in other situations. Most of these undesirable effects occur because during the reconfiguration process, no activity other than reconfiguration is allowed on the communication bus. Thus, regular communication to and between the peripherals is completely disabled. When the communication bus sends information to thrusters and rudders on a spacecraft, for example, the communication silence during reconfiguration of the bus can block or delay essential communications necessary to keep the system on course. In a spacecraft, a disruption for even a millisecond can place the mission in jeopardy. Additionally, if an error occurs during the reconfiguration, the communication bus may not work at all and may cause the entire system to fail. Thus, in some situations reconfiguration of the chain of peripherals is not even possible.

In many systems, e.g. spacecraft, a new connection to the peripheral chain will never occur after initial set-up. In these systems only disconnects will occur. Furthermore, many communication protocols have the built in capability of notifying a physical layer that a peripheral connected to the communication bus will be put into a sleep mode. In this situation, all layers of the peripheral device are disabled except for the physical layer. The physical layer remains active to awaken the peripheral when the peripheral comes out of sleep. Typically, this is used when a peripheral device is put into sleep mode to save power on the host device.

The present method and apparatus allows a peripheral to disconnect from a communication bus without causing disruption to other peripherals on the bus. The present apparatus does this by physically disconnecting from the communication bus without causing a reconfiguration of the communication bus. This is accomplished by placing the physical connector for the peripheral between the physical layer and the link layer of the interface protocol. Before the peripheral is disconnected the link layer is disabled. The physical layer, however, remains enabled during and after disconnection of the peripheral. The physical layer can remain enabled, because the location of the connector between the physical layer and the link layer allows the peripheral to be removed without removing the physical layer. Thus, the physical layer can remain in full communication with the communication bus during and after the peripheral device is disconnected. No reconfiguration of the bus is needed after disconnection of the peripheral, because the communication bus can still communicate with all the same physical layers as before disconnection of the peripheral. From the perspective of the communication bus, the peripheral set up has not changed. Additionally, the design does not alter regular interface functions at all.

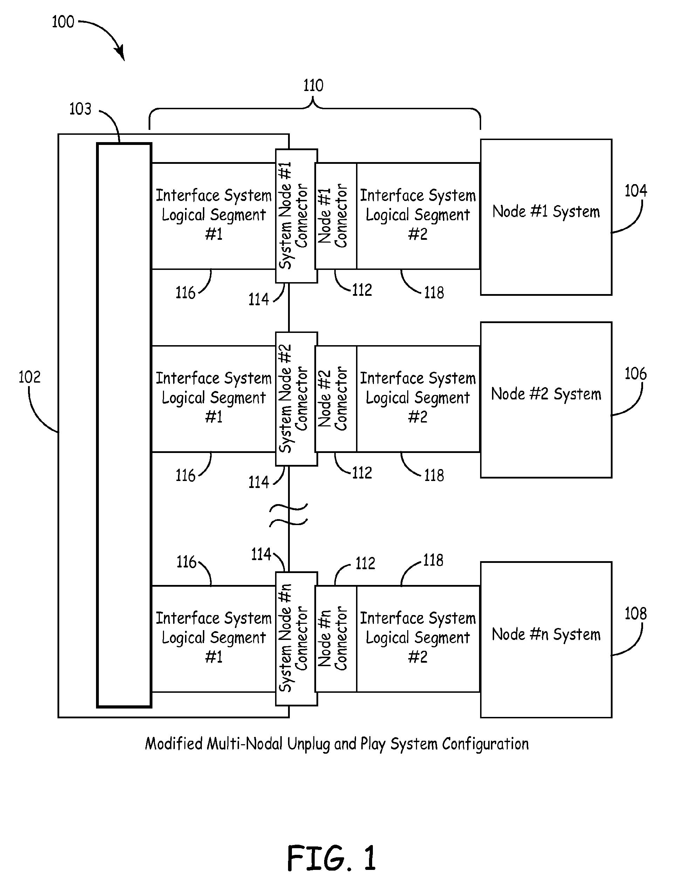

Figure 1 illustrates one embodiment, of a multi-peripheral system 100 for disconnecting a peripheral without causing reconfiguration of a communication bus. The central component of system 100 is host device 102. Host 102 has a communication bus 103 with a plurality of peripherals 104, 106, 108 connected thereto. In one embodiment, peripherals 104, 106, 108 are daisy-chained together with peripheral 104 at the beginning of the chain. Thus, communications to and from peripheral 108 must be relayed through peripheral 104 and peripheral 106 to and from host 102. In another embodiment, peripherals 104, 106, 108 are connected as a multi-drop system whereby each peripheral 104, 106, 108 has a direct communication path to host 102. Alternatively, peripherals 104, 106, 108 could be connected by switched hubs or any other method of connecting peripherals to a host system. Host 102 is Plug-and-Play enabled, therefore, peripherals 104, 106, 108 can be connected and disconnected at any time from host 102.

Peripherals 104, 106, 108 communicate with each other and host 102 over communications bus 103. In one embodiment, each peripheral 104, 106, 108 connects and disconnects with communication bus 103 using the same connectors and the same interfaces. The connectors and interfaces will, therefore, be explained in reference only to peripheral 106. In system 100, peripheral 106 communicates over communication bus 103 through a peripheral interface 110. Peripheral 106 can be connected and disconnected by plugging and unplugging a peripheral connector 112 to and from a host connector 114. In one embodiment, peripheral connector 112 is a male connector which is connectable to a female host connector 114.

The peripheral interface 110 allows peripheral 106 to communicate over communication bus 103. Interface 110 transforms commands/data from peripheral 106 into bits and transmits the bits over communication bus 103. In addition, interface 110 receives bits from communication bus 103 and transforms the bits back into commands/data before providing the commands/data to peripheral 106.

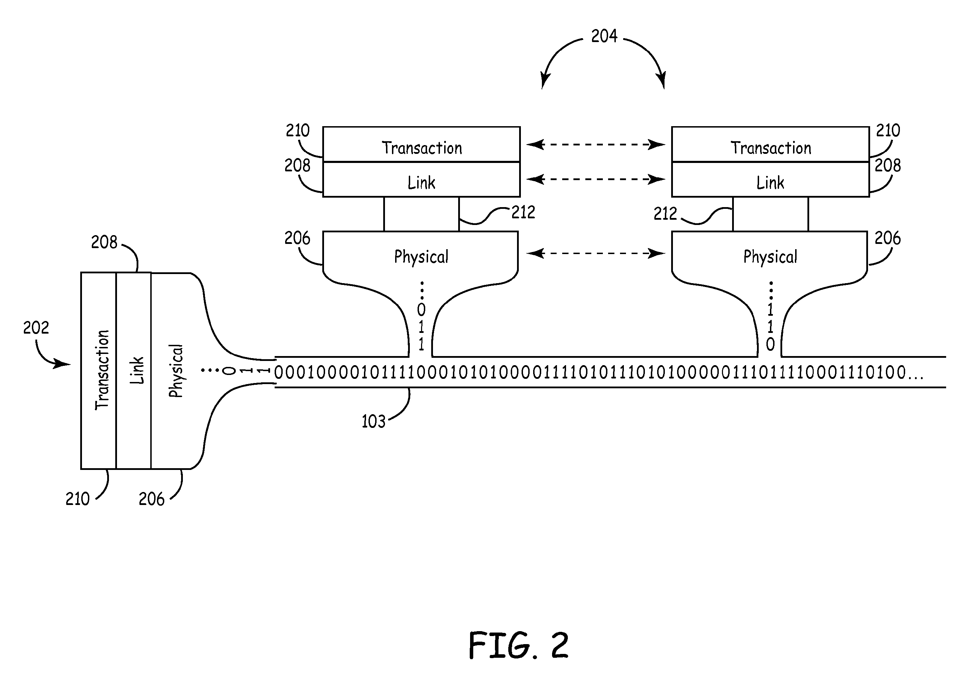

Figure 2 illustrates one embodiment of a communication bus 103 with a host interface 202 and two peripheral interfaces 204. Host interface 202 allows a processor (not shown) on a host device to transmit and receive over communication bus 103. Likewise, peripheral interface 204 allows a peripheral device to transmit and receive over communication bus 103. Host interface 202 and peripheral interfaces 204 are made up of three adjacent logical layers, a physical layer 206, a link layer 208, and an application layer 210. In one embodiment, peripheral interfaces have connectors 212 that allow a peripheral device to be disconnected from communication bus 103.

Logical layers 206, 208, 210 interact with one another to translate information between communication bus 103 and an associated peripheral or host device. For a peripheral or host device to receive data, bits from communications bus 103 are received and error checked by physical layer 206. Physical layer 206 then provides the bits to link layer 208. Link layer 208 forms the bits into packets and provides the packets to transaction layer 210. Transaction layer 210 forms the packets into commands/data, and provides the commands/data to the peripheral or host device for processing or storage. Commands/data being sent on communication bus 103, travels in the opposite direction through logical layers 206, 208, 210. First a peripheral or host device provides transaction layer 210 with the commands/data. Transaction layer 210 interprets the commands/data and provides it to link layer 208. Link layer 208 divides the information up into packets and provides the packets to physical layer 206. Physical layer 206 negotiates for space on communication bus 103 and sends the packets as a bit level transmission on communication bus 103. Alternatively, host interface 202 and peripheral interfaces 204 may have as many layers as desired, as long as peripheral interfaces 204 can form a junction for a connector as explained below. In one embodiment, communication bus 103 is an IEEE 1394 compliant bus, also known as Fire Wire. Alternatively, communication bus 103 could be a USB, a PCI bus, or other bus used to connect peripherals to a host system.

Referring back to Figure 1, connectors 112, 114 are located at the junction of two logical layers 116, 118 of peripheral interface 110. Connectors 112, 114 can be placed at any existing physical or logical junction of peripheral interface 110, as long as peripheral interface 110 is separated into distinct layers. Alternatively, a distinct junction can be created in peripheral interface 110. The placement of connectors 112, 114, however, should allow full communication with other peripherals 104, 108 and host 102 after peripheral 106 is disconnected. In this embodiment, logical layer 116 is a physical layer and logical layer 118 is a link layer of the IEEE 1394 protocol. The effect of the placement of connectors 112, 114 is to remove logical layer 116 layer of peripheral interface 110 from peripheral 106 and incorporate logical layer 116 into host 102. Alternatively, if connectors 112, 114 were placed at the junction of higher logical layers, additional logical layers would be incorporated into host 102.

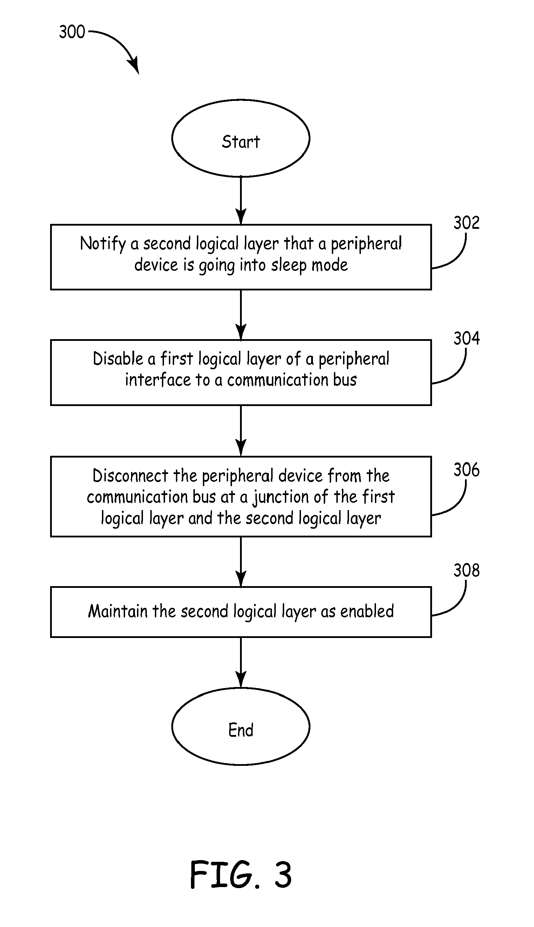

Figure 3 illustrates one embodiment of a method 300 of non-disruptively disconnecting a peripheral. First logical layers 116, 118 of peripheral interface 110 are notified that peripheral 106 will be disconnected. In one embodiment, logical layer 118 has a sleep mode function and logical layer 116 is notified that logical layer 118 is going into sleep mode (302). Logical layer 118 is then disabled (304). Peripheral 106 can now be physically disconnected from communication bus 103 (306). In one embodiment, peripheral 106 is a rocket booster and host 102 is a spacecraft. The rocket booster is physically disconnected from the spacecraft by unlatching a hitch and floating away the spacecraft. In the process of breaking away, rocket booster unplugs physical electrical connector 112 from another physical electrical connector 114 on the spacecraft. Throughout the process of disconnecting peripheral 106, and even after peripheral 106 and logical layer 118 have been disconnected from host 102, logical layer 116 remains enabled and in full communication with communication bus 103 (308). Logical layer 116, however, no longer attempts to communicate with logical layer 118. Logical layer 116 is still in full communication with communication bus 103, so no reconfiguration request is sent to host 102. Additionally, communication bus 103 is not tied up with a reconfiguration process, therefore, host 102 and peripherals 104, 108 can communicate at all times during and after the disconnect of peripheral 104.

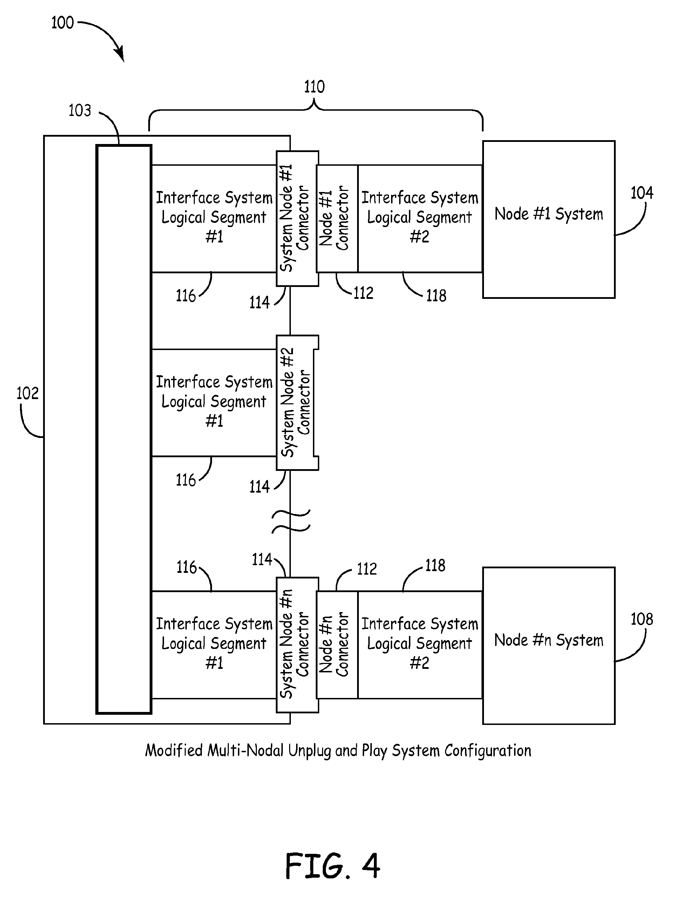

Figure 4 illustrates system 100 after peripheral 106 has been removed. Here, logical layer 116 of peripheral interface 110 is maintained in full communication with communication bus 103. Thus, communication bus 103 does not need to reconfigure, because the configuration of peripherals 104, 106, 108 has not changed. Additionally, if communication bus 103 is set up in a daisy-chain format, host 102 can still communicate with peripheral 108 because logical layer 116 is enabled and can forward data to and from peripheral 108. In another embodiment, if logical layer 116 attempts to initiate a reconfiguration request of communication bus 103, communication bus 103 will ignore the reconfiguration request. In yet another embodiment, a mechanism to block the reconfiguration request, such as a software interrupt, is implemented.

In another embodiment, logical layer 116 is not notified that peripheral 106 will be going to sleep prior to disconnecting peripheral 106. In this embodiment, host connector 114 has a sensor that detects the presence (or absence) of peripheral 106. When peripheral connector 118 is separated from host connector 116, host connector 114 sends a signal to logical layer 116 that peripheral 106 is in sleep mode. Logical layer 116 then no longer attempts to communicate with peripheral 106.

In one embodiment, peripheral 106 can also be re-connected without causing reconfiguration of communication bus 103. Since communication bus 103 did not go through reconfiguration when peripheral 106 was disconnected, communication bus 103 is still configured for peripheral 106 to be connected to host connector 114. Thus, no reconfiguration of communication bus 103 is needed to re-connect peripheral 106 to host 102 at host connector 114. Once peripheral connector 112 is connected to host connector 114, logical layer 116 of peripheral interface is enabled and peripheral 106 can communicate over communication bus 103. In one embodiment, although peripheral 106 can be re-connected without causing a disruption of communication bus 103, no other peripherals can be re-connected to host connector 114. Since communication bus 103 is still configured for peripheral 106, any other device if connected to host connector 114 will not be configured on communication bus 103. These other devices would require reconfiguration of communication bus 103 in order to work properly with host 102.

Although specific embodiments have been illustrated and described herein, it will be appreciated by those of ordinary skill in the art that any arrangement, which is calculated to achieve the same purpose, may be substituted for the specific embodiment shown. This application is intended to cover any adaptations or variations of the present invention. Therefore, it is manifestly intended that this invention be limited only by the claims and the equivalents thereof.

## Claims

1. An electronic device (102) comprising:
a communication bus (103) having a first logical layer (116) for interacting with a peripheral device (104), the first logical layer (116) configured to be adjacent to a second logical layer (118) on a peripheral device (104); and
a connector (114) at a junction of the first logical layer (116) and the second logical layer (118).

2. The device of claim 1, wherein the first logical layer (116) is a physical layer.

3. The device of claim 2, wherein the second logical layer (118) is a link layer.

4. The device of claim 1, wherein the communication bus (103) further comprises a host interface.

5. The device of claim 1, wherein the communication bus (103) is configured to have a plurality of devices (104) connected in a multi-drop arrangement.

6. The device of claim 1, wherein the communication bus (103) is configured to have a plurality of devices (104) connected in a daisy-chain arrangement.

7. The device of claim 1, wherein the communication bus (1030 is a plug-and-play communication bus.
